# EUROPÄISCHE PATENTANMELDUNG

(11) **EP 0 923 869 A2**
(43) Veröffentlichungstag der Anmeldung: **23.06.1999**
(21) Anmeldenummer: 98123887.6
(22) Anmeldetag: 16.12.1998
(51) Int. Cl.: A21D 6/00, A23L 1/10

(54) **Verfahren zur Herstellung von Quellmehl**

(30) Priorität: 20.12.1997 DE 19757151
(71) Anmelder: A+S Lebensmittel-Technologie GmbH, 66333 Völklingen (DE)
(72) Erfinder: Maes, Albert, 83400 Hyères (FR)
(74) Vertreter: Bernhardt, Winfrid, Dr.-Ing.

(57) **Zusammenfassung**

Die Erfindung betrifft ein Verfahren zur Herstellung von Quellmehl, bei dem ein stärkehaltiges Mehl unter Wärmeeinwirkung einer Quellbehandlung und das Quellprodukt anschließend unter Kristallisierung der Stärke einem Wasserentzug unterworfen wird. Bei bekannten Verfahren zur Herstellung von Quellmehl erfolgt ein Wasserentzug im Rahmen einer Extrudierung des Quellmaterials. Bei dem Verfahren nach der vorliegenden Erfindung wird das Quellmaterial zum Wasserentzug einem Unterdruck ausgesetzt. Durch diese Maßnahme ist es möglich, Quellmehle in höherer Qualität mit einem höheren Stärkegehalt herzustellen.

## Beschreibung

Die Erfindung betrifft ein Verfahren zur Herstellung von Quellmehl, bei dem ein stärkehaltiges Mehl unter Wärmeeinwirkung einer Quellbehandlung und das Quellprodukt unter Kristallisierung der Stärke einem Wasserentzug unterworfen wird.

Mit Wasser anrührbare Quellmehle werden in vielfältiger Weise, insbesondere zur Nahrungsmittelherstellung, verwendet. Ausgangsprodukte für die Herstellung solcher Quellmehle können aus beliebigen Getreide- und Hülsenfrüchtensorten oder Knollengewächsen hergestellte, Stärke enthaltene Mehle sein.

Bei einem herkömmlich zur Quellmehlherstellung verwendeten Verfahren der eingangs erwähnten Art erfolgt ein Wasserentzug im Rahmen einer Extrudierung des Quellmaterials.

Durch die vorliegende Erfindung wird ein gegenüber diesem Stand der Technik neues Verfahren zur Herstellung von Quellmehlen der eingangs erwähnten Art geschaffen, das dadurch gekennzeichnet ist, daß das Quellmaterial zum Wasserentzug einem Unterdruck, insbesondere Vakuum, ausgesetzt wird.

Gemäß dieser Erfindungslösung erfolgt gegenüber dem Wasserentzug durch Extrudierung eine schonende Materialbehandlung, so daß die Stärke unter Verbesserung der Qualität des Endprodukts in gewünschter Weise kristallisieren kann.

In vorteilhafter Ausgestaltung der Erfindung wird zur Herstellung des der Quellbehandlung unterworfenen Mehls ein Mehlausgangsprodukt fein vermahlen, das gebildete Feinmahlprodukt einer Partikelfraktionierung unterzogen und eine Partikelfraktion als das der Quellbehandlung zu unterwerfende Mehl ausgewählt.

Durch diese Maßnahme kann gewährleistet werden, daß das der Quellbehandlung unterzogene Mehl einen besonders hohen Stärkegehalt und entsprechend geringen Gehalt an anderen Substanzen, wie Proteinen, aufweist.

Vorzugsweise wird zur Partikelfraktionierung ein Luftklassifizierungsverfahren verwendet, bei dem Partikel mit unterschiedlicher Dichte voneinander getrennt werden.

In einer besonders bevorzugten Ausführungsform erfolgt eine Fraktionierung in drei Fraktionen, wobei eine Fraktion mit mittlerer Dichte als das der Quellbehandlung zu unterziehende Mehl ausgewählt wird.

In einer weiteren bevorzugten Ausführungsform der Erfindung werden mehrere Wasserentzugszyklen durchgeführt, zwischen denen das dem Wasserentzug unterworfene Quellmaterial zerkleinert wird. Durch diese Maßnahme kann die zum Wasserentzug benötigte Zeit insgesamt verkürzt werden, indem durch die Zerkleinerung die Weglängen, die das dem Quellmaterial zu entziehende Wasser innerhalb des Quellmaterials zurücklegen muß, verringert werden.

Der Wasserentzug erfolgt vorzugsweise bei einem vorgegebenen Vakuumunterdruck über eine vorbestimmte Zeitdauer, so daß ein gewünschter Vortrocknungsgrad des dem Wasserentzug unterworfenen Quellmaterials erreicht wird.

In weiterer Ausgestaltung des Verfahrens nach der Erfindung kann das dem Wasserentzug unterworfene Quellmaterial einer weiteren Zerkleinerung und einer Trocknung bis zu einer gewünschten Endfeuchte unterzogen werden, wobei diese Trocknung vorzugsweise nach dem Prinzip der Zylindertrocknung unter Durchblasen heißer Luft durch das weiter zerkleinerte Material erfolgt.

Ferner kann das dem Wasserentzug ausgesetzte Quellmaterial, insbesondere nach der weiteren Zerkleinerung und Trocknung, einer Feinvermahlung bis zu einer gewünschten Granulierung unterzogen werden, wobei eine Partikelfraktionierung des Feinmahlprodukts, insbesondere durch Luftklassifizierung, erfolgt. Durch diese Maßnahme läßt sich ein Endprodukt mit einem gegenüber bisher bekannten Quellmehlen erhöhten Stärkeanteil von bis zu 95% bei einer Endfeuchte bis zu 0,5% erzeugen.

Die Quellbehandlung erfolgt vorzugsweise unter Einhaltung einer vorbestimmten Quellzeit, wobei auch eine Regulierung eines der Quellung entgegenstehenden Widerstandes entsprechend vorbestimmten Widerstandswerten durchgeführt und so die Bildung des Quellmaterials in gewünschter Weise gesteuert werden kann.

Die Erfindung soll nun anhand eines Ausführungsbeispiels und der beiliegenden, sich auf dieses Ausführungsbeispiel beziehenden Zeichnungen näher erläutert und beschrieben werden. Es zeigen:
- Fig. 1: einen ersten Abschnitt eines ein Ausführungsbeispiel für die Erfindung erläuternden Ablaufschemas, und
- Fig. 2: die Fortsetzung des Ablaufschemas von Fig. 1.

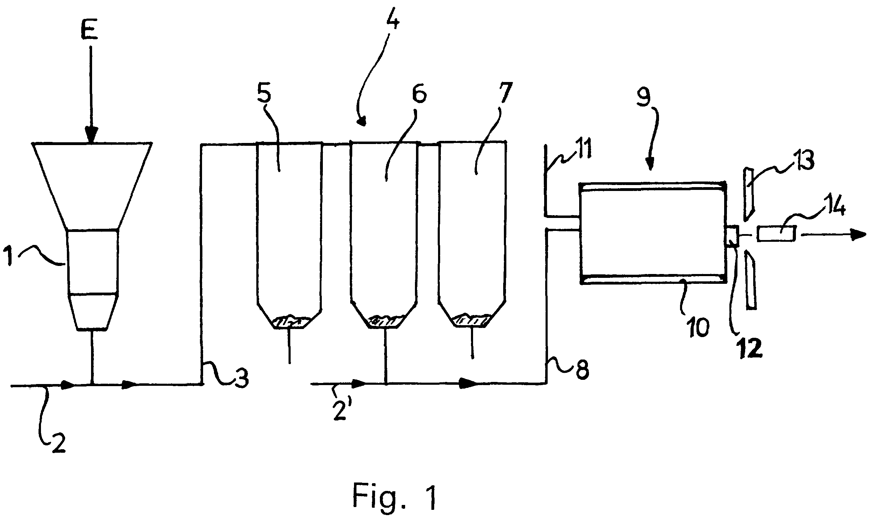

Mit dem Bezugszeichen 1 ist in der Fig. 1 eine Mahleinrichtung bezeichnet, die einen Eingang E einer Herstellungsanlage für Quellmehl bildet. Die Mahleinrichtung 1 dient zur Feinvermahlung eines Ausgangsprodukts, bei dem es sich um ein aus beliebigen Getreide- und Hülsenfrüchtensorten oder Knollengewächsen hergestelltes Mehl handeln kann.

Das fein gemahlene Mehl gelangt über eine aus einer Zweigleitung 2 gespeiste Druckluftförderteitung 3 in eine Fraktionierungseinrichtung 4 mit Fraktionierungsbehältern 5 bis 7. Bei der Fraktionierungseinrichtung 4 handelt es sich um eine Luftklassifizierungseinrichtung, die das fein vermahlene Ausgangsprodukt in drei Fraktionen verlegen kann, wobei eine Fraktionierung nach der Dichte der Mehlpartikel erfolgt.

In dem gezeigten Ausführungsbeispiel wird eine im Behälter 6 abgelagerte Fraktion mit mittlerer Teilchendichte zur Weiterverarbeitung ausgewählt und über eine Druckluftförderleitung 8 einem Quell-zylinder 9 zugeführt. In den Behältern 5 und 7 der Luftklassifizierungseinrichtung 4 gebildete Fraktionen werden anderweitig verwendet.

Dem über einen ölgefüllten Heizmantel 10 beheizbaren Quellzylinder 9 kann über einen Anschluß 11 in entsprechender Dosierung zur Materialzufuhr über die Leitung 8 Wasser zugeführt werden.

Der Quellzylinder 9 weist einen Ausgang 12 auf, über den ein der Quellung entgegenstehender Widerstand regulierbar ist.

Bei 13 ist in Fig. 1 eine Schneideinrichtung angedeutet, die zur Zerkleinerung von durch den Ausgang 12 aus dem Quellzylinder 9 austretendem Quellmaterial 14 dient.

Das durch die Schneideinrichtung zerkleinerte Material wird über eine nicht gezeigte Fördereinrichtung einer Vakuumkammer 15, die mit einer Evakuierungspumpe 16 verbunden ist, zugeführt. In der Vakuumkammer 15 wird dem zugeführten Quellmaterial Wasser entzogen.

Der Vakuumkammer 15 nachgeschaltet ist eine weitere Schneideinrichtung 17 zur Zerkleinerung von unter Wasserentzug durch die Vakuumkammer 15 gelaufenem Quellmaterial. Das durch die Schneideinrichtung 17 weiter zerkleinerte Quellmaterial kann über eine nicht gezeigte Transporteinrichtung gemäß Strichlinie 18 zum Eingang und erneuten Durchlaufen der Vakuumkammer 15 zurückgeführt werden.

Nach Behandlung in der Vakuumkammer 15 wird das entwässerte Quellmaterial über eine nicht gezeigte Transporteinrichtung entsprechend der Strichlinie 19 einer weiteren Mahleinrichtung 20 zugeführt, in welcher eine Grobvermahlung des entwässerten Quellmaterials erfolgt. Das grobe Mahlprodukt gelangt über eine Druckluftförderleitung 21 in eine Trocknungseinrichtung 22, die nach dem Zylindertrocknungsprinzip arbeitet, wonach heiße Trocknungsluft durch das Material geblasen wird.

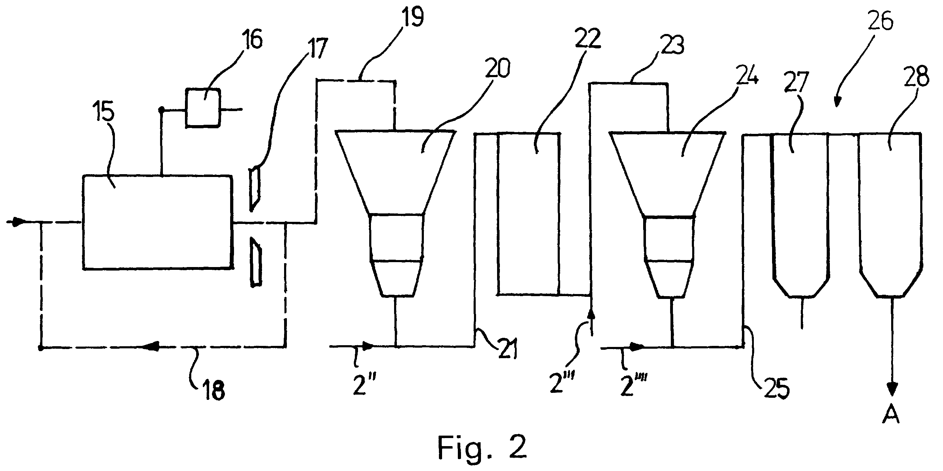

Von der Trocknungseinrichtung 22 gelangt das bis zu einer gewünschten Endfeuchte getrocknete Material über eine Druckluftförderleitung 23 zu einer weiteren Mahleinrichtung 24, in der eine Feinvermahlung des getrockneten Materials bis zu einer gewünschten Granulation erfolgt. Das fein vermahlene Material gelangt über eine weitere Druckluftförderleitung 25 in eine Fraktionierungseinrichtung 26 mit Fraktionierungsbehältern 27 und 28. Die Einrichtung 26 fraktioniert das fein vermahlene Material nach der Teilchendichte. Als Endprodukt wird eine sich in dem Behälter 28 absetzende Fraktion ausgewählt. Das heißt, der Behälter 28 bildet einen Ausgang A der in den Fig. 1 und 2 beschriebenen Herstellungsanlage für Quellmehl.

Mit den Bezugszeichen 2' bis 2'''' sind jeweils Druckeinspeisungen für die Druckluftförderleitungen 8, 21, 23 und 25 bezeichnet.

Die Vermahlung des Ausgangsmaterials der Mahleinrichtung 1 erfolgt z.B. bis zu einer minimalen Partikelgröße von 20 µm.

Die in dem Behälter 6 der Fraktionierungseinrichtung 4 abgesetzte Fraktion mit mittlerer Partikeldichte weist gegenüber den anderen Fraktionen einen erhöhten Stärkegehalt auf, wodurch diese Fraktion im Zusammenhang mit den vorgesehenen weiteren Verarbeitungsschritten und der zu erreichenden Endproduktqualität am besten geeignet ist.

Der Quellvorgang in dem Quellzylinder 9 wird entsprechend einer vorbestimmten Quellzeit und unter Regulierung des der Quellung entgegenstehenden Widerstandes, auch unter Berücksichtigung des verwendeten Ausgangsprodukts, so gesteuert, daß sich gewünschte Eigenschaften des Quellmaterials ergeben.

Der Wasserentzug in der Vakuumkammer 15 erfolgt gegebenenfalls in mehreren Zyklen, bis eine gewünschten Vortrocknung des Materials erreicht ist. Die Zyklusdauer und der Evakuietungsdruck können entsprechend gewünschten Eigenschaften des die Vakuumkammer 15 verlassenden Materials vorbestimmt sein.

Nach der Feinvermahlung liegt bereits ein hochwertiges Quellmehl mit hohem Stärkegehalt vor.

Durch die darauf folgende Fraktionierung läßt sich eine nochmalige Anreichung des Stärkegehalts erreichen, indem die sich in dem Fraktionierungsbehälter 28 der Fraktionierungseinrichtung 26 absetzende Fraktion weitgehend von Proteinpartikeln befreit ist. Im Ausgangsmaterial enthaltenes Protein wird bei der Quellbehandlung unter Hitzeeinwirkung bei Temperaturen zwischen 100 und 200° denaturiert. Durch die Fraktionierung lassen sich je nach Kundenwunsch nahezu beliebig hohe Endproduktqualitäten einstellen.

Das anhand der Fig. 1 und 2 beschriebene Verfahren erlaubt Quellmehle mit einem bis auf 95% erhöhten Stärkeanteil bei einer Endfeuchte von bis zu 0,5% herzustellen.

## Patentansprüche

1. Verfahren zur Herstellung von Quellmehl, bei dem ein stärkehaltiges Mehl unter Wärmeeinwirkung einer Quellbehandlung und das Quellprodukt anschließend unter Kristallisierung der Stärke einem Wasserentzug unterworfen wird,
dadurch gekennzeichnet,
daß das Quellmaterial (14) zum Wasserentzug einem Unterdruck (15), insbesondere Vakuum, ausgesetzt wird.

2. Verfahren nach Anspruch 1,
dadurch gekennzeichnet,
daß zur Herstellung des der Quellbehandlung unterworfenen Mehls ein Mehlausgangsprodukt fein vermahlen (1), das gebildete Feinmahlprodukt einer Partikelfraktionierung (4) unterzogen und eine Partikelfraktion (6) als das der Quellbehandlung (9) zu unterziehende Mehl ausgewählt wird.

3. Verfahren nach Anspruch 2,
dadurch gekennzeichnet,
daß zur Partikelfraktionierung ein Luftklassifizierungsverfahren (4) angewendet wird.

4. Verfahren nach Anspruch 2 oder 3,
dadurch gekennzeichnet,
daß eine Fraktionierung nach der Teilchendichte erfolgt.

5. Verfahren nach einem der Ansprüche 2 bis 4,
dadurch gekennzeichnet,
daß als das der Quellbehandlung zu unterziehende Material eine Fraktion (6) mittlerer Dichte von drei gebildeten Fraktionen (5-7) ausgewählt wird.

6. Verfahren nach einem der Ansprüche 1 bis 5,
dadurch gekennzeichnet,
daß mehrere Wasserentzugszyklen durchgeführt werden, zwischen denen das dem Wasserentzug unterworfene Quellmaterial zerkleinert (17) wird.

7. Verfahren nach Anspruch 5 oder 6,
dadurch gekennzeichnet,
daß der Wasserentzug bei einem vorgegebenen Evakuierungsunterdruck über eine vorbestimmte Zeitdauer durchgeführt wird.

8. Verfahren nach Anspruch 7,
dadurch gekennzeichnet,
daß die Zeitdauer entsprechend einem gewünschten Vortrocknungsgrad des dem Wasserentzug unterworfenen Quellmaterials (14) vorbestimmt wird.

9. Verfahren nach einem der Ansprüche 1 bis 8,
dadurch gekennzeichnet,
daß das dem Wasserentzug unterworfene Quellmaterial einer weiteren Zerkleinerung (20) und einer Trocknung (22) bis zu einer gewünschten Endfeuchte unterzogen wird.

10. Verfahren nach Anspruch 9,
dadurch gekennzeichnet,
daß die Trocknung nach dem Prinzip der Zylindertrocknung (22) unter Durchblasen heißer Luft durch das weiter zerkleinerte Material erfolgt.

11. Verfahren nach einem der Ansprüche 1 bis 10,
dadurch gekennzeichnet,
daß das dem Wasserentzug ausgesetzte Quellmaterial, insbesondere nach der weiteren Zerkleinerung und Trocknung, einer Feinvermahlung (24) bis zu einer gewünschten Granulation unterzogen wird.

12. Verfahren nach Anspruch 11,
dadurch gekennzeichnet,
daß das Feinmahlprodukt einer Partikelfraktionierung, insbesondere durch Luftklassifizierung (26) unterworfen wird.

13. Verfahren nach einem der Ansprüche 1 bis 12
dadurch gekennzeichnet,
daß die Quellbehandlung (9) unter Einhaltung einer vorbestimmten Quellzeit erfolgt.

14. Verfahren nach einem der Ansprüche 1 bis 13,
dadurch gekennzeichnet,
daß die Quellbehandlung (9) unter Regulierung (12) eines der Quellung entgegenstehenden Widerstandes entsprechend vorbestimmten Widerstandswerten durchgeführt wird.
